(19)

Europäisches
Patentamt
European
Patent Office
Office européen
des brevets

(11) **EP 4 215 562 A1**

(12) **EUROPEAN PATENT APPLICATION**
published in accordance with Art. 153(4) EPC

(43) Date of publication:
**26.07.2023 Bulletin 2023/30**

(21) Application number: **21957721.0**

(22) Date of filing: **27.12.2021**

(51) International Patent Classification (IPC):
**C08G 63/20** (2006.01)

(52) Cooperative Patent Classification (CPC):
**Y02W 30/62**

(86) International application number:
**PCT/CN2021/141549**

(87) International publication number:
**WO 2023/060768 (20.04.2023 Gazette 2023/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.10.2021  CN 202111194646**

(71) Applicant: **National Industrial Innovation Center of Polymer**
**Materials Co., Ltd**
**Guangzhou Hi-Tech Industrial Development Zone**
**Guangzhou, Guangdong 510663 (CN)**

(72) Inventors:
• **WU, Bo**
**Guangzhou, Guangdong 510663 (CN)**

• **XIE, Xiaoqiong**
**Guangzhou, Guangdong 510663 (CN)**
• **LI, Jianjun**
**Guangzhou, Guangdong 510663 (CN)**
• **CHEN, Pingxu**
**Guangzhou, Guangdong 510663 (CN)**
• **NING, Hongtao**
**Guangzhou, Guangdong 510663 (CN)**
• **YE, Nanbiao**
**Guangzhou, Guangdong 510663 (CN)**
• **PANG, Chenghuan**
**Guangzhou, Guangdong 510663 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **METHOD FOR PREPARING REGENERATED POLYESTER BY MEANS OF CLOSED-LOOP RECOVERY OF WASTE POLYESTER WITH TYPICAL GREEN AND LOW-CARBON CHARACTERISTICS**

(57)    Disclosed in the present invention is a method with typical green and low-carbon characteristics for preparing recycled polyester by closed-loop recycling of waste polyester. The method includes subjecting the waste polyester to depolymerization by using a specific depolymerization catalyst; removing a polyol solvent from a depolymerization product, and removing a by-product by purification to obtain a depolymerization monomer; mixing the depolymerization monomer with a binary acid, a polyol, a polymerization catalyst, and a chain extender to carry out an esterification reaction; and then adding a stabilizer and a catalyst for condensation polymerization to obtain the recycled polyester. The method of the present invention has low depolymerization temperature, high efficiency, low use amount of the polyol solvent, and extremely low content of a by-product. Meanwhile, the depolymerization catalyst can be directly used for the co-esterification of the recycled polyester without separation, and adverse effects on properties of the prepared recycled polyester cannot be caused. According to the method of the present invention, closed-loop recycling of the waste polyester can be achieved.

EP 4 215 562 A1

FIG. 3

**Description**

<u>TECHNICAL FIELD</u>

The present invention relates to the technical field of chemical reclamation of polyester, and in particular to a method with typical green and low-carbon characteristics for preparing recycled polyester by closed-loop recycling of waste polyester.

<u>BACKGROUND</u>

With rapid development of the polyester industry, the problem of disposal of waste polyester products is aroused. Due to huge stock of the waste polyester products in the society, not only great pressure is brought to the ecological environment, but also serious waste of petrochemical resources is caused. Therefore, a large amount of waste polyester needs to be recycled and reclaimed.

Methods for recycling of the waste polyester mainly include two types: physical recycling and chemical recycling. Based on the thermoplasticity of the polyester, the physical recycling mainly includes subjecting the polyester and a product thereof to impurity removal, cleaning, melting, and granulation to obtain secondary plastic or a fiber product. Although the physical recycling is simple in process and low in cost, only downcycling of the polyester can be realized. Moreover, due to limited recycling times, the purpose of recycling cannot be achieved. The chemical recycling includes subjecting the polyester to depolymerization through the attack of a small-molecule depolymerizing agent on a large-molecule chain to obtain a polymeric monomer or intermediate, followed by separation, purification, and repolymerization to achieve reclamation based on the reversibility of a condensation polymerization reaction of the polyester and a nucleophilic reaction mechanism of a transesterification reaction. When the waste polyester is reclaimed by a chemical recycling method, resources can be effectively used, and environmental loads can be reduced.

Existing chemical methods for recycling of the waste polyester mainly have the following defects. (1) Residues of heavy metal depolymerization catalyst have adverse effects on properties of the recycled polyester. For example, the recycled polyester is likely to be decomposed, is low in viscosity, and has excessive contents of heavy metals. (2) In a depolymerization process of the waste polyester, the temperature is high, the use amount of a depolymerizing agent is high, a reaction mostly needs to be carried out under pressurized conditions, the depolymerization time is long, requirements for the safety of a reaction device are high, and the energy consumption is relatively high, so that current technical requirements for green and low-carbon development are not met. Meanwhile, by-products having complex components are likely to be produced, and the depolymerization efficiency is affected while high energy consumption and a series of environmental impacts are caused during disposal of the by-products. (3) The recycled polyester is unlikely to be applied in same or similar scenes before recycling, and that is to say, closed-loop recycling is difficult to realize. Moreover, at present, after the chemical recycling, PET is mainly used for preparing plastic bottles, fibers, and fabrics, while recycling of degradable plastic obtained after industrial preparation is rarely involved. In addition, at present, the degradable plastic has harsh composting conditions, and cannot be effectively and thoroughly degraded in the natural environment. Closed-loop recycling of degradable materials becomes an inevitable trend.

According to a Chinese patent application CN107266664A, a process for recycling of polyester waste is disclosed. PET waste is depolymerized with zinc acetate as a catalyst. However, due to a catalytic mechanism of zinc ions remaining in a depolymerization product for coordination of carbonyl oxygen, thermal degradation and other side reactions in a repolymerization process are accelerated, so that the increase of the molecular weight is limited, and recycled polyester has low viscosity and poor quality. According to a Chinese patent application CN102731310A, a method for catalytic alcoholysis of PET by a first transition metal ionic liquid is disclosed. However, a catalyst including such ionic liquid has high contents of halogen group elements. When the catalyst is not removed from a depolymerization product, macromolecules are decomposed by hydrogen halide produced in a repolymerization process, and the quality of a repolymerization product is seriously affected. Moreover, according to the method, the added amount of the catalyst is required to be 10 wt.% of that of the PET, and the use amount of an alcoholysis solvent, namely ethylene glycol, is about 4-10 times that of the PET, so that the use amounts of the catalyst and the diol are large.

According to a Chinese patent application CN 104327260A, a method for preparing biodegradable recycled polyester is disclosed. A diol titanium alkali metal coordination compound capable of being dissolved in ethylene glycol is used as a depolymerization catalyst. Waste PET is subjected to depolymerization and co-polymerization to obtain recycled polyester. However, on the one hand, the method can only be used for recycling the waste PET without involving other kinds of waste polyester. On the other hand, in an alcoholysis process based on the method, depolymerization is conducted at a temperature of 160-240° C for 0.5-5 hours. The temperature is too high, and the time is too long, so that the ethylene glycol is likely to undergo cyclodehydration to produce a cyclization by-product. Moreover, in the method, the use amount of an alcoholysis agent is large, and the process is complicated.

According to an existing technology (Meng Hui. Influence of Technological Conditions on Tetrahydrofuran, By-product of Esterification Process, in Synthesis of Polybutylene Succinate [D]. East China University of Science and Technology, 2011), a solution for a cyclization by-product is reported. For example, the production rate and yield of a cyclization by-product, namely tetrahydrofuran, in an esterification process are decreased by introducing nitrogen, reducing the reaction temperature, and using other methods. However, in a depolymerization reaction, the polyester cannot be depolymerized at too low reaction temperature for a too short reaction time.

Under the policy of green, low-carbon, and circular development and the requirements of national strategies of peak carbon dioxide emissions and carbon neutrality, it is urgent to develop a method with typical green and low-carbon characteristics for preparing recycled polyester by closed-loop recycling of waste polyester.

## SUMMARY

In order to overcome the defects of non-closed-loop recycling of waste polyester and high contents of by-products in the prior art, the present invention provides a green method for preparing recycled polyester by closed-loop recycling of waste polyester.

In order to solve the above technical problems, the present invention adopts the following technical schemes.

A method with typical green and low-carbon characteristics for preparing recycled polyester by closed-loop recycling of waste polyester includes the following steps:

S1, depolymerization of waste polyester:

dissolving the waste polyester in a polyol solvent including a depolymerization catalyst and a microwave absorbent, and carrying out a depolymerization reaction under microwave conditions at normal pressure in an inert gas atmosphere to obtain a depolymerization product, where
the depolymerization catalyst includes one or more of a titanate nanotube, titanium phosphate, titanium dioxide, butyl titanate, titanium glycolate, or titanium butanediol; and
the depolymerization reaction is carried out at a temperature of 150-170°C in a temperature fluctuation of 2°C or less, for 6-35 minutes;

S2, purification of the depolymerization product:
removing the polyol solvent from the depolymerization product obtained in step S1, and removing a by-product by purification to obtain a depolymerization monomer;
S3, co-esterification:
mixing the depolymerization monomer obtained in step S2 with a binary acid, a polyol, a polymerization catalyst, and a chain extender, and carrying out a polymerization reaction under microwave conditions in an inert gas atmosphere to obtain an esterification product; and
S4, condensation polymerization:
mixing the esterification product obtained in step S3 with a catalyst and a stabilizer, and carrying out a condensation polymerization reaction under vacuuming conditions to obtain the recycled polyester.

In the present invention, a series of aliphatic-aromatic copolyester can be synthesized by the depolymerization of the waste polyester to serve as the recycled polyester. Not only is chemical recycling of the polyester effectively realized, but also chemical depolymerization and recycling of the recycled polyester after use are realized, so that closed-loop recycling is realized.

In the present invention, the titanate nanotube, the titanium phosphate, the titanium dioxide, the butyl titanate, the titanium glycolate, or the titanium butanediol is used as the depolymerization catalyst in the depolymerization process. On the one hand, an excellent depolymerization effect is achieved. On the other hand, the titanium-containing catalyst can be directly used as the catalyst for the co-esterification of the recycled polyester without separation after being used in the depolymerization of the waste polyester, and adverse effects on properties of the prepared recycled polyester cannot be caused. Furthermore, the catalytic system of the present invention does not include limiting elements of degradable polyester, raw materials are controlled in the synthesis process of the recycled polyester, and a strong guarantee is provided for subsequent recycling.

It is found by the inventor that when the depolymerization reaction of the waste polyester is carried out under microwave conditions, on one hand, both the inside and outside of a polyester raw material to be depolymerized are heated by microwaves, so that uniform heating and thorough depolymerization are realized. On the other hand, by using the microwaves, the same depolymerization effect as a traditional heating method can be achieved at very low temperature, so that the depolymerization reaction can be carried out efficiently and rapidly. Not only the depolymerization degree of the waste polyester is ensured, but also the polymerization time is greatly shortened, and the reaction temperature is lowered. Moreover, the production of a cyclization product caused by polyol in the polymerization process is reduced, the yield is increased, and the environmental pollution caused by disposal of a by-product is reduced.

In the depolymerization process in step S1, not only is the depolymerization reaction required to be carried out in a temperature range of 150-170°C, but also the polymerization reaction is required to be carried out at constant temperature, and that is to say, a single depolymerization reaction is carried out in a temperature fluctuation of not greater than ±2°C.

Under the condition of constant temperature, the production of a by-product can be reduced, and meanwhile extremely high depolymerization rate and reaction efficiency are ensured.

The waste polyester includes one or more of poly(butylene adipate-co-terephthalate) (PBAT), poly(butylene sebacate-co-terephthalate) copolyester (PBSeT), poly(ethylene terephthalate-co-1,4-cylclohexylenedimethylene terephthalate) (PETG), poly(1,4-cyclohexylene dimethylene terephthalate glycol) (PCTG), polybutylene terephthalate (PBT), or polyethylene terephthalate (PET).

The waste polyester may be derived from one or more of post-consumer recycled plastic (PCR), post industry recycled plastic (PIR), or ocean waste plastic.

The ocean waste plastic may include ocean bound plastic (OBP) and/or in-the-ocean plastic (IOP).

The waste polyester may be directly used in the depolymerization after impurity removal, cleaning, and crushing.

Preferably, the depolymerization catalyst includes one or more of the titanate nanotube, the titanium phosphate, or the butyl titanate.

When the titanate nanotube, the titanium phosphate, or the butyl titanate is used as the depolymerization catalyst for the same waste polyester, the depolymerization efficiency is better, and the depolymerization time is shorter, so that the production of a cyclization product is further reduced.

Preferably, the depolymerization catalyst accounts for 0.05-0.15 wt.% of the waste polyester.

Preferably, in step S1, a mass ratio of the waste polyester to the polyol is 1:(0.6-3).

Preferably, the microwave absorbent includes one or more of sodium carbonate, sodium chloride, activated carbon, or sodium phosphate.

More preferably, the microwave absorbent is the sodium carbonate.

Preferably, in step S1, the microwave absorbent accounts for 0.01-1 wt.% of the waste polyester.

It is found by the inventor through research that the sodium carbonate has both a microwave absorption effect and a depolymerization catalysis effect. When the sodium carbonate is used as the microwave absorbent, the depolymerization efficiency in step S1 is further improved.

Preferably, in step S1, the microwave conditions include a microwave power of 500-1,000 W and a microwave wavelength of 122 mm.

Preferably, in step S1, the depolymerization reaction is carried out at a temperature of 155-165°C for 10-30 minutes.

More preferably, in step S1, the depolymerization reaction is carried out at a temperature of 160°C for 10 minutes.

According to the technical schemes of the application, in the process of carrying out the depolymerization reaction under microwave conditions, the microwave power is not directly related to the temperature of the depolymerization reaction.

Preferably, in step S2, the polyol solvent is removed by reduced pressure distillation and vacuum drying.

Preferably, in step S2, the purification includes dissolution, recrystallization, and filtration.

In step S3, the polymerization catalyst may be a polymerization catalyst commonly used for polyester.

Preferably, in step S3, the depolymerization catalyst includes one or more of butyl titanate, propyl titanate, a titanium phosphide, a titanium silicide, or ethyl titanate.

Preferably, both the polyol solvent in step S1 and the diol in step S3 include one or more of ethylene glycol, propylene glycol, 1,4-butanediol, pentanediol, and glycerol.

Preferably, in step S3, the binary acid is an aliphatic binary acid with a carbon atom number of 2-36.

Preferably, in step S3, a mass ratio of the polyol to the binary acid is (0.2-1): 1.

Preferably, both the polyol solvent in step S1 and the diol in step S3 are the 1,4-butanediol, and the binary acid in step S3 includes sebacic acid and/or adipic acid.

When the co-esterification is conducted with the biomass 1,4-butanediol and the sebacic acid as raw materials, the content of biomass in the prepared recycled polyester is equal to or greater than 60%, so that the concept of green, low-carbon, and circular development including simultaneous biomass recycling and chemical recycling is fully achieved.

Preferably, in step S3, the microwave conditions are 500-1,000 w.

Preferably, in step S3, the polymerization reaction is carried out at a temperature of 160-180°C for 30-90 minutes.

Preferably, in step S3, the polymerization catalyst accounts for 0.03-2 wt.% of a sum of masses of the depolymerization monomer, the binary acid, the diol, and the chain extender.

Preferably, in step S3, the chain extender includes one or more of a polyol chain extender, an isocyanate chain extender, an anhydride chain extender, or an epoxy compound chain extender.

Optionally, the polyol chain extender includes one or more of ethylene glycol, glycerol, pentaerythritol, trimethylolpropane, xylitol, or sorbitol.

Optionally, the isocyanate chain extender includes one or more of toluene diisocyanate (TDI), methylenediphenyl diisocyanate (MDI), hexamethylene diisocyanate (HDI), or isophorone diisocyanate.

Optionally, the epoxy compound chain extender may be an ADR chain extender.

Preferably, the catalyst in step S4 is the same as the polymerization catalyst in step S3.

Preferably, in step S4, the stabilizer includes one or more of an organic phosphite stabilizer, a phosphate stabilizer, or a hindered phenol stabilizer.

Optionally, the organic phosphite stabilizer may include one or more of trimethyl phosphite, triethyl phosphite, or triphenyl phosphite.

Optionally, the phosphate stabilizer may include one or more of triphenyl phosphate, trimethyl phosphate, or triethyl phosphate.

Optionally, the hindered phenol stabilizer may include 3,5-di-tert-butyl-4-hydroxybenzyl diethylphosphonate (antioxidant 1222) and/or an antioxidant 1010.

Preferably, the condensation polymerization reaction is carried out at a temperature of 230-250°C and a pressure of 20-100 Pa for 3-5 hours.

Compared with the prior art, the present invention has the following beneficial effects.

In the present invention, the recycled polyester synthesized by the depolymerization and repolymerization of the waste polyester is still fully biodegradable polyester. Not only chemical recycling of the polyester effectively is realized, but also chemical depolymerization and recycling of the recycled polyester after use are realized, so as to realize closed-loop recycling.

In the present invention, a specific titanium-containing catalyst is used as the depolymerization catalyst in the depolymerization process. The waste polyester is depolymerized at low temperature for a short time in the presence of the microwave absorbent. Moreover, the use amount of the diol solvent is small, and the added amount of the catalyst is small. Extremely high depolymerization efficiency is achieved, and meanwhile, the yield of a by-product is low. The depolymerization catalyst can be directly used for the co-esterification in the next step without separation, and adverse effects on properties of the prepared recycled polyester cannot be caused, so that green chemical recycling is effectively achieved.

When the co-esterification is conducted with the biomass 1,4-butanediol and the sebacic acid as raw materials, the content of biomass in the prepared recycled polyester is equal to or greater than 60%, so that the technical route of simultaneous biomass recycling and chemical recycling is achieved. According to measurement results of life cycle assessment (LCA), due to the introduction of the biomass raw materials and the waste polyester as raw materials, carbon emissions are reduced by more than 60% in comparison with the existing chemical recycling routes, so that low-carbon characteristics of a technical route and a product are fully reflected.

Due to light, heat, scouring by seawater, attachment with organisms and microorganisms, and influence caused by other various factors, a waste PET bottle derived from ocean garbage has obviously deteriorated properties, brittle appearance, reduced transparency and other characteristics. The essence is that after the polyester is degraded, the molecular weight is decreased, and the characteristic viscosity is reduced. A degradation product becomes microplastic after entering the ocean. Due to obviously reduced properties, most of the waste PET from the ocean can only be subjected to downcycling or energy recycling based on conventional physical recycling after salvage and collection, so that the principle of recycling and full utilization of resources cannot be effectively reflected. According to the present invention, not only the purposes of protecting the environment and reducing the pollution caused by the microplastic can be achieved by recycling the ocean garbage, but also the collected waste PET as a resource can be converted into a high-value secondary product for full utilization based on chemical recycling, so that the dual purposes of environmental protection and high-quality recycling of resources are achieved.

**BRIEF DESCRIPTION OF DRAWINGS**

FIG. 1 is a diagram showing the infrared spectra of a depolymerization reaction fraction and a polymerization reaction fraction in Example 1, a depolymerization reaction fraction in Comparative Example 7, and a standard solution of tetrahydrofuran.
FIG. 2 is a diagram showing the infrared spectrum of a depolymerization monomer prepared in Example 1.
FIG. 3 is a diagram showing the infrared spectrum of recycled polyester prepared in Example 1.
FIG. 4 shows the nuclear magnetic hydrogen spectrum of the recycled polyester prepared in Example 1.

## DETAILED DESCRIPTION OF EMBODIMENTS

The present invention is further described below in conjunction with specific embodiments.

All raw materials in examples and comparative examples are commercially available.

Waste polyester:

PET particles were purchased from POLINDO PT. Ocean waste PET bottle flakes (with a characteristic viscosity of less than 0.5 dL/g and a weight-average molecular weight of less than 16,000 g/mol) were purchased from Blue Ribbon Ocean Conservation Association. PCTG and PETG were purchased from Guangzhou Ruisheng Plastic Co., Ltd. PBAT and PBSeT were purchased from Zhuhai Wantong Chemical Co., Ltd.

Depolymerization catalyst:

Titanate nanotube was purchased from XFNANO. Titanium phosphate was purchased from Weihai Tianchuang Fine Chemical Co. Ltd. Butyl titanate was purchased from Aladdin. Zinc acetate was purchased from Aladdin.

Microwave absorbent:

Sodium carbonate and sodium chloride were purchased from Macklin. Activated carbon powder is commercially available and analytically pure, and has an average particle size of 30 $\mu$m. Silicon carbide was purchased from Macklin.

Stabilizer:

Trimethyl phosphite and triphenyl phosphate were purchased from Aladdin.
Diols: 1,4-butanediol (BDO) is biological BDO, and was purchased from Shandong Landian Biological Technology Co., Ltd.
Binary acids: Sebacic acid was purchased from Jinan Bo Ao Chemical Co., Ltd.
Unless otherwise specified, reagents, methods, and devices used in the present invention are conventional reagents, methods, and devices in the technical field.

## Examples 1-5

In Examples 1-5, a method for preparing recycled polyester by closed-loop recycling of waste polyester is separately provided. The method includes the following steps with specific raw materials and reaction conditions as shown in Table 1:
S1, depolymerization of waste polyester:
dissolving the waste polyester with an average particle size of equal to or less than 2 mm in a diol solvent including a depolymerization catalyst and a microwave absorbent, putting an obtained mixture into a 500 mL glass reactor, transferring the glass reactor into a microwave chemical synthesis instrument (model ANKS-SR8, Qingdao Ankx Microwave Automation Equipment Co., Ltd.), and carrying out a depolymerization reaction under microwave conditions in a nitrogen atmosphere to obtain a depolymerization product;
S2, purification of the depolymerization product:
removing the diol solvent from the depolymerization product obtained in step S1 by reduced pressure distillation, and conducting purification to obtain a depolymerization monomer;
S3, co-esterification:
mixing the depolymerization monomer obtained in step S2 with a binary acid, a diol, a polymerization catalyst, and a chain extender, and carrying out a polymerization reaction under microwave conditions in an inert gas atmosphere to obtain an esterification product; and
S4, condensation polymerization:
adding a stabilizer and a catalyst into the esterification product obtained in step S3, and carrying out a condensation polymerization reaction under vacuuming conditions to obtain the recycled polyester.

Table 1 Raw materials and reaction conditions in Examples 1-5

| | Raw materials and reaction conditions | Example 1 | Example 2 | Example 3 | Example 4 | Example 5 |
|---|---|---|---|---|---|---|
| S1 Depolymerization | Waste polyester | PET particle 60 g, and PETG 40 g | PET particle 60 g, and PBAT 40 g | PBT 100 g | PET particle 60 g, and PBSeT 40 g | Ocean waste PET bottle flake 100 g |
| | Depolymerization catalyst | Titanate nanotube 0.05 g | Titanate nanotube 0.1 g | Butyl titanate 0.1 g | Titanium phosphate 0.1 g | Titanium metal complex 0.15 g |
| | Microwave absorbent | Sodium carbonate 0.1 g | Sodium chloride 5 g | Activated carbon 5 g | Sodium chloride 5 g | Sodium carbonate 2.5 g |
| | Diol solvent | 1,4-butanediol 150 g | 1,4-butanediol 150 g | 1,4-butanediol 60 g | 1,4-butanediol 60 g | 1,4-butanediol 300 g |
| | Microwave conditions | Heating stage power 1,000 w, heat preservation power 500 w, and wavelength 122 mm | Heating stage power 1,000 w, heat preservation power 500 w, and wavelength 122 mm | Heating stage power 1,000 w, heat preservation power 500 w, and wavelength 122 mm | Heating stage power 1,000 w, heat preservation power 500 w, and wavelength 122 mm | Heating stage power 1,000 w, heat preservation power 300 w, and wavelength 122 mm |
| | Depolymerization conditions | Normal pressure, temperature 160±2°C, and time 10 minutes | Normal pressure, temperature 160±2°C, and time 10 minutes | Normal pressure, temperature 170±2°C, and time 8 minutes | Normal pressure, temperature 160±2°C, and time 10 minutes | Normal pressure, temperature 160±2°C, and time 8 minutes |
| S2 Purification | Removal of a solvent | Reduced pressure distillation | Reduced pressure distillation | Reduced pressure distillation | Reduced pressure distillation | Reduced pressure distillation |
| | Removal of a by-product | Reduced pressure distillation Dissolution, precipitation, and suction filtration | Reduced pressure distillation Dissolution, precipitation, and suction filtration | Reduced pressure distillation Dissolution, precipitation, and suction filtration | Reduced pressure distillation Dissolution, precipitation, and suction filtration | Reduced pressure distillation Dissolution, precipitation, and suction filtration |

(continued)

| | Raw materials and reaction conditions | Example 1 | Example 2 | Example 3 | Example 4 | Example 5 |
|---|---|---|---|---|---|---|
| S3 Co-esterification | Depolymerization monomer | BHBT 70 g | BHBT 70 g | BHBT 70 g | BHBT 70 g | BHBT 70 g |
| | Binary acid | Sebacic acid 70 g | Adipic acid 70 g | Sebacic acid 70 g | Sebacic acid 70 g | Sebacic acid 150 g |
| | Diol | 1,4-butanediol 50 g | 1,4-butanediol 35 g | 1,4-butanediol 35 g | 1,4-butanediol 35 g | 1,4-butanediol 135 g |
| | Polymerization catalyst | Butyl titanate 70 mg | Propyl titanate 70 mg | Butyl titanate 70 mg | Butyl titanate 3.5 g | Butyl titanate 70 mg |
| | Chain extender | Trimethylolpropane 70 mg | Trimethylolpropane 70 mg | Trimethylolpropane 70 mg | Hexamethylene diisocyanate 70 mg | Hexamethylene diisocyanate 70 mg |
| | Microwave conditions | Heating stage power set to be 1,000 w, and heat preservation power 500 w | Heating stage power set to be 1,000 w, and heat preservation power 500 w | Heating stage power set to be 1,000 w, and heat preservation power 500 w | Heating stage power set to be 1,000 w, and heat preservation power 500 w | Heating stage power set to be 1,000 w, and heat preservation power 500 w |
| | Polymerization conditions | Temperature 160°C, and time 60 minutes | Temperature 165°C, and time 30 minutes | Temperature 170°C, and time 50 minutes | Temperature 165°C, and time 60 minutes | Temperature 165°C, and time 60 minutes |
| S4 Condensation polymerization | Catalyst | Butyl titanate 100mg | Butyl titanate 100 mg | Butyl titanate 100 mg | Butyl titanate 100 mg | Butyl titanate 100 mg |
| | Stabilizer | Trimethyl phosphite 50 mg | Trimethyl phosphite 50 mg | Triphenyl phosphate 50 mg | Trimethyl phosphite 50 mg | Trimethyl phosphite 80 mg |
| | Condensation polymerization conditions | Temperature 240°C, time 4 hours, and pressure 60 Pa | Temperature 245°C, time 3 hours, and pressure 60 Pa | Temperature 235°C, time 4.5 hours, and pressure 60 Pa | Temperature 240°C, time 4 hours, and pressure 60 Pa | Temperature 240°C, time 4 hours, and pressure 100 Pa |

**Examples 6-10**

In Examples 6-10, a method for preparing biodegradable polyester by closed-loop recycling of waste polyester is provided. Except for the depolymerization conditions in step S1, other steps are the same as those in Example 1.

In Example 6, in step S1, the depolymerization was conducted at a constant temperature of $150\pm2°C$ for 35 minutes.

In Example 7, in step S1, the depolymerization was conducted at a constant temperature of $155\pm2°C$ for 30 minutes.

In Example 8, in step S1, the depolymerization was conducted at a constant temperature of $165\pm2°C$ for 10 minutes.

In Example 9, in step S1, the depolymerization was conducted at a constant temperature of $170\pm2°C$ for 8 minutes.

In Example 10, in step S1, the depolymerization was conducted at a constant temperature of $160\pm1°C$ for 10 minutes.

**Comparative Examples 1-6**

In Comparative Examples 1-6, a method for preparing biodegradable polyester by closed-loop recycling of a mixture of waste PET and PETG is provided. Steps are the same as those in Example 1, and specific raw materials and reaction conditions are as shown in Table 2.

Table 2 Raw materials and reaction conditions in Comparative Examples 1-3

| | Raw materials and reaction conditions | Comparative Example 1 | Comparative Example 2 | Comparative Example 3 |
|---|---|---|---|---|
| S1 Depolymerization | Waste polyester | PET particle 60 g, and PETG 40 g | PET particle 60 g, and PETG 40 g | PET particle 60 g, and PETG 40 g |
| | Depolymerization catalyst | Titanate nanotube 0.05 g | Titanate nanotube 0.05 g | Zinc acetate 0.15 g |
| | Microwave absorbent | / | / | Sodium carbonate 0.05 g |
| | Diol solvent | 1,4-butanediol 150 g | 1,4-butanediol 150 g | 1,4-butanediol 150 g |
| | Microwave conditions | / | / | Heating stage power set to be 1,000 w, and heat preservation power 500 w |
| | Depolymerization conditions | Temperature 160°C, and time 10 minutes | Temperature 220°C, and time 180 minutes | Temperature 160°C, and time 60 minutes |
| S2 Purification | Removal of a solvent | Nearly no depolymerization | Reduced pressure distillation | Reduced pressure distillation |
| | Removal of a by-product | | Reduced pressure distillation Dissolution, precipitation, and suction filtration | Reduced pressure distillation Dissolution, precipitation, and suction filtration |
| S3 Co-esterification | Depolymerization monomer | / | BHBT 70 g | BHBT 70 g |
| | Binary acid | / | Adipic acid 70 g | Adipic acid 70 g |
| | Diol | / | 1,4-butanediol 35 g | 1,4-butanediol 35 g |
| | Polymerization catalyst | / | Butyl titanate 70 mg | Butyl titanate 70 mg |
| | Chain extender | / | Trimethylolpropa ne 70 mg | Trimethylolpropa ne 70 mg |
| | Microwave conditions | / | / | Heating stage power 1,000 w, v |
| | Polymerization conditions | / | Temperature 180°C, and time 50 minutes | Temperature 160°C, and time 50 minutes |
| S4 Condensation polymerization | Catalyst | / | Butyl titanate 100 mg | Butyl titanate 100 mg |
| | Stabilizer | / | Phosphite 50 mg | Phosphite 50 mg |
| | Condensation polymerization conditions | / | Temperature 240°C, time 4 hours, and pressure 50 Pa | Temperature 240°C, time 4 hours, and pressure 50 Pa |

**Comparative Examples 4-6**

In Comparative Examples 4-6, a method for preparing biodegradable polyester by closed-loop recycling of a mixture of waste PET and PETG is provided. Except for the depolymerization conditions in step S1, other steps, raw materials, and reaction conditions are the same as those in Example 1.
In Comparative Example 4, in step S1, the depolymerization was conducted at a constant temperature of 140±2°C for 90 minutes.
In Example 5, in step S1, the depolymerization was conducted at a constant temperature of 190±2°C for 10 minutes.
In Example 6, in step S1, the depolymerization was conducted at a temperature of 160°C in a fluctuation range of ±5°C for 10 minutes.

**Comparative Example 7**

In Comparative Example 7, a method for preparing biodegradable polyester by closed-loop recycling of a mixture of waste PET and PETG is provided. Steps are similar to those in Example 1 of Chinese patent application CN 104327260 A. The method specifically includes the following steps:

S1, preparing an alcoholysis catalyst, namely lithium butanediol titanate, including the following steps:
a) uniformly mixing tetraethyl titanate with butanediol at 50°C under the protection of nitrogen, where a molar ratio of the tetraethyl titanate to the butanediol was 1: 100; b) adding lithium hydroxide where a molar ratio of the lithium hydroxide to the tetraethyl titanate was 2.05:1, continuously stirring until a reaction system became a uniform and transparent liquid, and increasing the reaction temperature to 180°C; and c) in a reaction process, refluxing the butanediol, and removing ethanol with low boiling point and water generated in the reaction, where the reaction was carried out for 3 hours; after the reaction was completed, completely evaporating butanediol in the system at a temperature of 190°C and a reaction system pressure of 0.5 atm within 0.5 minutes, and completely evaporating a diol in the system to obtain a white solid; then subjecting the solid to recrystallization for three times with ethanol-chloroform to obtain a colorless crystal, namely the lithium butanediol titanate;
S2, dissolving the alcoholysis catalyst, namely the lithium butanediol titanate prepared above, in a depolymerization agent (butanediol) to form a depolymerization solution, where the use amount of the lithium butanediol titanate was 1% of the mass of the butanediol;
S3, mixing the depolymerization solution with a mixture of waste PET and PETG, and carrying out a depolymerization reaction under the protection of an inert gas under stirring at a rate of 1,500 r/min, where a molar ratio of the use amount of the depolymerization agent (butanediol) to the mixture of waste PET and PETG was 20:1, and the depolymerization reaction was carried out a temperature of 190°C and a reaction system pressure of 1 atm for 3 hours;
S4, adding a butanediol dispersion solution including activated carbon with a mass fraction of 0.5% into a resulting solution, where the added amount of the butanediol dispersion solution including activated carbon was 1.5 times the mass of the depolymerization solution; and conducting reflux stirring and decolorization for 5 hours under normal pressure at a temperature of 150°C, followed by filtration to remove impurities and the activated carbon used for decolorization, and repeating the processes of decolorization and filtration for 2 times;
S5, after the impurity removal and the decolorization, completely evaporating the butanediol in the butanediol solution including a depolymerization product at a temperature of 190°C and a pressure of 0.5 atm to obtain a purified and decolorized depolymerization product;
S6, preparing adipic acid-dibutanediol ester: mixing 1,6-adipic acid, butanediol, and polybutanediol 4000 at equal mass, adding 100 ppm lithium butanediol titanate as a catalyst, carrying out an esterification reaction at a temperature of 170°C and a pressure of 1 atm for 4 hours, distilling out water produced during the reaction in time, introducing an inert gas for protection during the reaction, and after the reaction was completed, obtaining the adipic acid-dibutanediol ester; and
S7, mixing the products obtained in step S5 and step S6 at a mass ratio of 8:2, adding 100 ppm lithium butanediol titanate as a condensation polymerization catalyst and 50 ppm trimethyl phosphate as a heat stabilizer, and conducting stirring and mixing at 220°C at a pressure of 1 atm under the protection of an inert gas; increasing the reaction temperature to 250°C for carrying out a reaction continuously for 120 minutes; and meanwhile, reducing the pressure in the system to 1 kPa at a constant rate during this period; and then, increasing the reaction temperature to 265°C, and reducing the pressure in the system to 20 Pa to carry out a reaction continuously for 180 minutes to obtain recycled polyester.

**Performance tests**

Performances of the depolymerization products and the recycled polyester prepared in the above examples and comparative examples are tested. Specific methods are as follows.

Qualitative measurement of depolymerization monomers and recycled polyester: The depolymerization monomers and the recycled polyester were separately detected by infrared spectroscopy by using a determination method under the following test conditions: transmission; reference sample, KBr; detector, DTGS; wavelength number range, 400-4.000 cm$^{-1}$; resolution, 4 cm$^{-1}$; and scanning times, 32.

Yield of tetrahydrofuran (THF): Distilled fractions were weighed and subjected to qualitative measurement by infrared spectroscopy. The contents of tetrahydrofuran and other by-products were analyzed by a gas chromatography-hydrogen flame detector. Standard samples including ethylene glycol, tetrahydrofuran, 1,4-butanediol, and isopropyl alcohol were analytically pure. A gas phase capillary column with a size of 30 m*0.32 mm*0.25 μm of Agilent in the United States was used as a chromatographic column with isopropyl alcohol as an internal standard. The measurement was conducted by using an injector at a temperature of 250°C, a detector at a temperature of 300°C. As a carrier gas, $N_2$ at a flow rate of 30 mL/min at a $H_2$ flow rate of 30 mL/min, an air flow rate of 300 mL/min, and a sample injection volume of 0.5 μL.

$$\text{Depolymerization rate of PET} = (1\text{-weight of unreacted waste polyester fine particles/feed amount of waste polyester})*100\%.$$

$$\text{Yield of recycled polyester: Yield of recycled polyester} = \text{actual weight of a product/theoretical weight}*100\%.$$

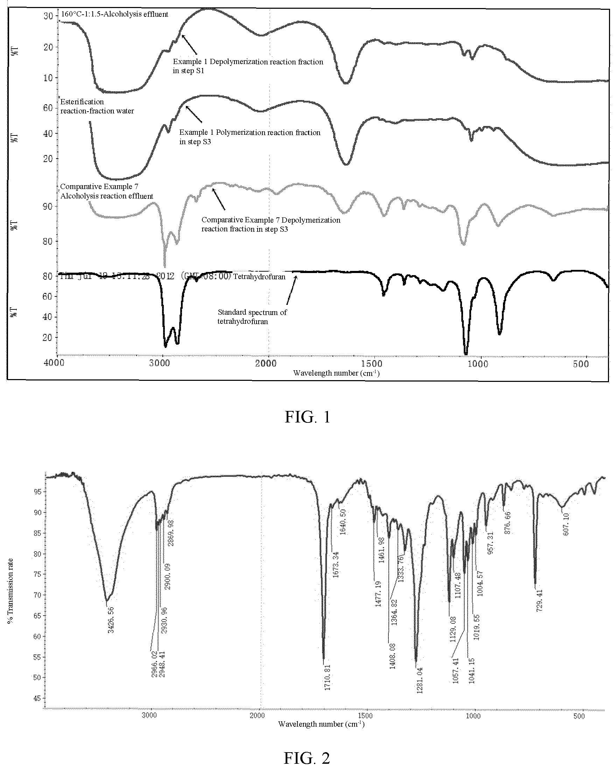

A depolymerization reaction fraction and a polymerization reaction fraction in Example 1 and a depolymerization reaction fraction in Comparative Example 7 were collected by a double condensation system, and measured by infrared spectroscopy. The spectra are as shown in FIG. 1. It can be seen that the depolymerization reaction fraction in Example 1 mainly includes water and ethylene glycol, and the polymerization reaction fraction mainly includes water and butanediol. However, compared with a standard solution of tetrahydrofuran, the depolymerization reaction fraction in Comparative Example 7 has obvious characteristic peaks of THF, indicating that more THF by-products were produced in the reaction.

The depolymerization monomer prepared in Example 1 was measured by infrared spectroscopy. According to the infrared spectrum in FIG. 2, it can be confirmed that the depolymerization monomer obtained in Example 1 is a dihydroxybutyl terephthalate (BHBT).

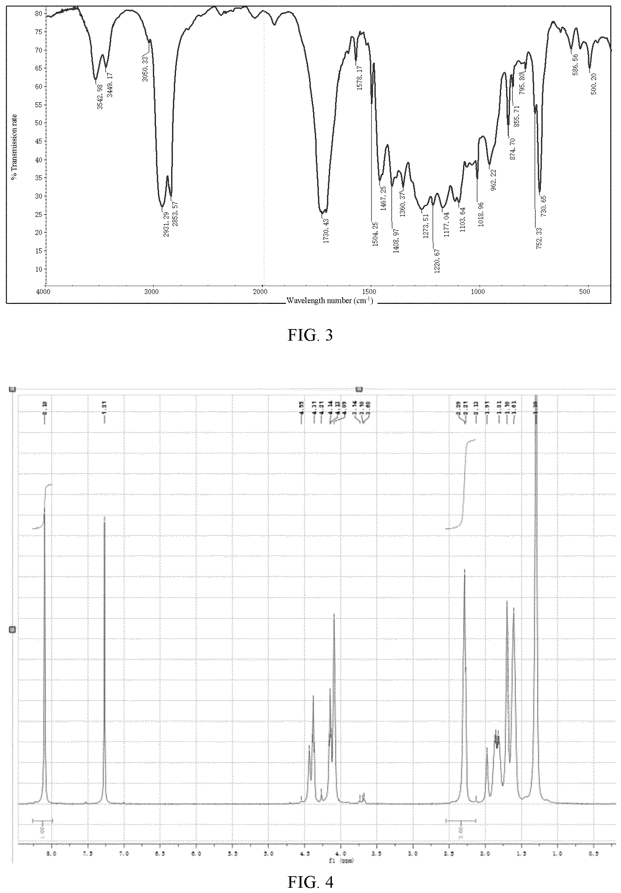

The recycled polyester prepared in Example 1 was measured by infrared spectroscopy. According to the infrared spectrum in FIG. 3, carbonyl (-C=O) having a stretching vibration absorption peak at 1,730 cm$^{-1}$ belongs to carbonyl on an ester bond in PBSeT copolyester, and an ether bond (C-O-C) has stretching vibration absorption peaks at 1,120 cm$^{-1}$ and 1,177 cm$^{-1}$. A (-C-H) group having a stretching vibration absorption peak and an out-of-plane bending vibration absorption peak at 3,050 cm$^{-1}$ belongs to a (-C-H) group on a benzene ring. In the figure, a new absorption peak at 1,578 cm$^{-1}$ is a stretching vibration peak of a benzene skeleton, a strong absorption peak at 752 cm$^{-1}$ is a stretching vibration absorption peak of C-H close to the benzene ring, and an absorption peak at 1,467cm$^{-1}$ is an in-plane bending vibration absorption peak of -CH$_2$-CH$_2$- in the PBSeT copolyester. Methylene (-CH$_2$-) on a molecular chain of the PBSeT copolyester has a stretching vibration absorption peak, a stretching vibration absorption peak, and an in-plane bending vibration peak at 2,931 cm$^{-1}$, 1,408 cm$^{-1}$, and 1,360 cm$^{-1}$ respectively. Intermolecular associative hydroxyl (-OH) having a stretching vibration absorption peak at 3,400-3,630 cm$^{-1}$ belongs to terminal hydroxyl in the PBSeT copolyester. It can be confirmed that the recycled polyester prepared in Example 1 is PBSeT.

Test results of various examples and comparative examples are as shown in Table 3.

Table 3 Test results of Examples 1-10 and Comparative Examples 1-4

|  | Example 1 | Example 2 | Example 3 | Example 4 | Example 5 |
|---|---|---|---|---|---|
| Depolymerization monomer | BHBT | BHBT | BHBT | BHBT | BHBT |
| Depolymerization rate of waste polyester | 100% | 100% | 100% | 100% | 100% |
| Recycled polyester | PBSeT | PBAT | PBSeT | PBSeT | PBSeT |
| Yield of recycled polyester | 95% | 88% | 86% | 87% | 85% |

| Yield of THF (%) | 3.0 | 3.3 | 3.4 | 3.3 | 3.5 |
| --- | --- | --- | --- | --- | --- |
| | Example 6 | Example 7 | Example 8 | Example 9 | Example 10 |
| Depolymerization monomer | BHBT | BHBT | BHBT | BHBT | BHBT |
| Depolymerization rate of waste polyester | 99% | 99.9% | 99.9% | 99.9% | 99.9% |
| Recycled polyester | PBSeT | PBSeT | PBSeT | PBSeT | PBSeT |
| Yield of recycled polyester | 89% | 91% | 94% | 92% | 96% |
| Yield of THF (%) | 3.5 | 3.2 | 3.1 | 3.3 | 2.9 |

| | Comparative Example 1 | Comparative Example 2 | Comparative Example 3 | Comparative Example 4 | Comparative Example 5 | Comparative Example 6 | Comparative Example 7 |
| --- | --- | --- | --- | --- | --- | --- | --- |
| Depolymerization monomer | BHBT | BHBT | BHBT | BHBT | BHBT | BHBT | BHBT |
| Depolymerization rate of waste polyester | 3% | 90% | 85% | 4% | 99.9% | 90.5% | 84% |
| Recycled polyester | / | PBSeT | PBSeT | / | PBSeT | PBSeT | PBAT |
| Yield of recycled polyester | / | 85% | 84% | / | 86% | 85% | 83% |
| Yield of THF (%) | / | 5 | 3.5 | / | 4.2 | 3.7 | 7 |

According to the test results in the above table, it can be seen that closed-loop recycling of the waste polyester can be effectively achieved by using the method of the present invention, and the method has low depolymerization temperature, short time, and high depolymerization efficiency. Moreover, the method has high yield of an obtained depolymerization monomer and extremely low content of a by-product.

However, Compared with Example 1, since no microwave is used in the depolymerization process in Comparative Example 1, the depolymerization efficiency is extremely low at the same depolymerization temperature for the same time, and nearly no depolymerization is conducted. In Comparative Example 2, no microwave is used in the depolymerization, but the reaction temperature is increased, and the reaction time is prolonged. Although the polymerization efficiency is improved to a certain extent, a large number of a cyclization by-product is produced in the depolymerization process, and the yield of THF is 5%. In Comparative Example 3, although the depolymerization process is carried out under microwave conditions, the depolymerization efficiency is poor since the zinc acetate is used as the depolymerization catalyst. In addition, the characteristic viscosity of the recycled polyester is affected by zinc remaining in the reaction system, and the finally prepared recycled polyester has a yield of 84% and a characteristic viscosity of 1.251 dL.g$^{-1}$. In Comparative Example 4, although the depolymerization process is carried out under microwave conditions, the depolymerization efficiency is low since the temperature is too low, and alcoholysis of the waste polyester cannot be conducted in a short time. In Comparative Example 5, the depolymerization is conducted at a temperature of 190±2° C. Since the temperature is too high, the yield of THF reaches 4.2%. In Comparative Example 6, since the depolymerization is not conducted at constant temperature and is conducted in a fluctuation of up to 5°C, the depolymerization rate of the waste polyester and the yield of the recycled polyester are low. In Comparative Example 7, the recycled polyester is prepared by a similar method of the prior art. It can be seen that the content of a by-product obtained by using the method is high, the yield of THF is up to 7%, and the yield of the recycled polyester is only 83%.

Apparently, the above embodiments of the present invention are merely examples for clearly illustrating the present invention, and are not construed as limitations of the implementation modes of the present invention. Other changes or modifications can be made by persons of ordinary skill in the art on the basis of the above descriptions. All the implementation modes are unnecessary and impossible to be illustrated herein. Any modification, equivalent substitution, improvement and the like made within the spirit and principle of the present invention shall be included in the protection scope of the claims of the present invention.

**Claims**

1. A method with typical green and low-carbon characteristics for preparing recycled polyester by closed-loop recycling of waste polyester, **characterized in that**, the method comprises the following steps:

   S1, depolymerization of waste polyester:

   dissolving the waste polyester in a polyol solvent including a depolymerization catalyst and a microwave absorbent, and carrying out a depolymerization reaction under microwave conditions at normal pressure in an inert gas atmosphere to obtain a depolymerization product, wherein
   the depolymerization catalyst comprises one or more of a titanate nanotube, titanium phosphate, titanium dioxide, butyl titanate, titanium glycolate, or titanium butanediol; and
   the depolymerization reaction is carried out at a temperature of 150-170°C in a temperature fluctuation of 2°C or less, for 6-35 minutes;

   S2, purification of the depolymerization product:
   removing the polyol solvent from the depolymerization product obtained in step S1, and removing a by-product by purification to obtain a depolymerization monomer;
   S3, co-esterification:
   mixing the depolymerization monomer obtained in step S2 with a binary acid, a polyol, a polymerization catalyst, and a chain extender, and carrying out a reaction under microwave conditions in an inert gas atmosphere to obtain an esterification product; and
   S4, condensation polymerization:
   mixing the esterification product obtained in step S3 with a catalyst and a stabilizer, and carrying out a condensation polymerization reaction under vacuuming conditions to obtain the recycled polyester.

2. The method according to claim 1, wherein in step S1, the depolymerization reaction is carried out at a temperature of 155-165°C for 10-30 minutes.

3. The method according to claim 1, wherein the depolymerization catalyst accounts for 0.05-0.15 wt.% of the waste polyester.

4. The method according to claim 1, wherein in step S1, a mass ratio of the waste polyester to the polyol is 1:(0.6-3).

5. The method according to claim 1, wherein in step S1, the microwave conditions comprise a microwave power of 500-1000 W and a microwave wavelength of 122 mm.

6. The method according to claim 1, wherein the waste polyester comprises one or more of poly(butylene adipate-co-terephthalate), poly(butylene sebacate-co-terephthalate) copolyester, polyethylene terephthalate-co-1,4-cylclohexylenedimethylene terephthalate), poly(1,4-cyclohexylene dimethylene terephthalate glycol), polybutylene terephthalate, or polyethylene terephthalate.

7. The method according to claim 1, wherein the microwave absorbent comprises one or more of sodium carbonate, sodium chloride, activated carbon, or sodium phosphate.

8. The method according to claim 1, wherein the depolymerization catalyst comprises one or more of butyl titanate, propyl titanate, a titanium phosphide, a titanium silicide, or ethyl titanate.

9. The method according to claim 1, wherein in step S4, the stabilizer comprises one or more of an organic phosphite stabilizer, a trimethyl phosphate stabilizer, or a hindered phenol stabilizer.

10. The method according to claim 1, wherein in S3, the microwave conditions are 500-1000 w, and the polymerization reaction is carried out at a temperature of 160-180°C for 30-90 minutes.

FIG. 1

FIG. 2

FIG. 3

FIG. 4

## INTERNATIONAL SEARCH REPORT

| International application No. |
|---|
| **PCT/CN2021/141549** |

**A. CLASSIFICATION OF SUBJECT MATTER**

C08G 63/20(2006.01)i; C08G 63/183(2006.01)i; C08G 63/685(2006.01)i

According to International Patent Classification (IPC) or to both national classification and IPC

**B. FIELDS SEARCHED**

Minimum documentation searched (classification system followed by classification symbols)

C08G63

Documentation searched other than minimum documentation to the extent that such documents are included in the fields searched

Electronic data base consulted during the international search (name of data base and, where practicable, search terms used)

WPI, EPODOC, CNPAT, 中国期刊网全文数据库, CJFD: 再生, 聚酯, 解聚, 催化剂, 微波, 钛, 酯化, 缩聚, regenerat+, polyester, recovery, waste, depolymeriz+, catalyst, microwave, polycondensa+, recycl+, titanium, sodium, pet

**C. DOCUMENTS CONSIDERED TO BE RELEVANT**

| Category* | Citation of document, with indication, where appropriate, of the relevant passages | Relevant to claim No. |
|---|---|---|
| A | US 2009318579 A1 (KUMAMOTO TECHNOLOGY AND INDUSTRY FOUNDATION) 24 December 2009 (2009-12-24) <br> description, paragraph [0138], and table 2 | 1-10 |
| A | JP 2006335856 A (KUMAMOTO TECHNOLOGY AND INDUSTRY FOUNDATION) 14 December 2006 (2006-12-14) <br> description, paragraph [0051], and table 2 | 1-10 |
| A | CN 104327260 A (DONGHUA UNIVERSITY) 04 February 2015 (2015-02-04) <br> description, paragraphs [0049]-[0064] | 1-10 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 June 2022** | **18 July 2022** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/141549**

| Patent document cited in search report | | | Publication date (day/month/year) | Patent family member(s) | | | Publication date (day/month/year) |
|---|---|---|---|---|---|---|---|
| US | 2009318579 | A1 | 24 December 2009 | JP | 2010174249 | A | 12 August 2010 |
| | | | | WO | 2007066446 | A1 | 14 June 2007 |
| | | | | JP | 2010185077 | A | 26 August 2010 |
| | | | | JP | WO2007066446 | A1 | 14 May 2009 |
| | | | | EP | 1964877 | A1 | 03 September 2008 |
| JP | 2006335856 | A | 14 December 2006 | None | | | |
| CN | 104327260 | A | 04 February 2015 | None | | | |

Form PCT/ISA/210 (patent family annex) (January 2015)

**EP 4 215 562 A1**

**Patent documents cited in the description**

- CN 107266664 A
- CN 102731310 A

- CN 104327260 A

**Non-patent literature cited in the description**

- Influence of Technological Conditions on Tetrahydrofuran, By-product of Esterification Process. **MENG HUI.** Synthesis of Polybutylene Succinate. East China University of Science and Technology, 2011